# EUROPÄISCHE PATENTANMELDUNG

(11) **EP 3 789 350 A1**
(43) Veröffentlichungstag der Anmeldung: **10.03.2021**
(21) Anmeldenummer: 20187883.2
(22) Anmeldetag: 27.07.2020
(51) Int. Cl.: C02F 1/461, C02F 101/30, C02F 101/36, C02F 101/38, C02F 1/48

(54) **VERFAHREN UND ANLAGE ZUR AUFBEREITUNG VON WASSER**

(30) Priorität: 06.09.2019 DE 102019123943
(71) Anmelder: Städt. Werke AG, 34117 Kassel (DE)
(72) Erfinder: KLEIN, Harald, 37217 Witzenhausen (DE)
(74) Vertreter: Meitinger, Thomas Heinz

(57) **Zusammenfassung**

Es wird ein Verfahren zur Aufbereitung von Abwasser, wobei das Abwasser einem elektromagnetischen Wechselfeld ausgesetzt wird, um einen Inhaltsstoff aus dem Abwasser zu entfernen, umfassend die Schritte: Anlegen des elektromagnetischen Wechselfeldes und Anlegen der Resonanzfrequenz oder einer Frequenz in der Nähe der Resonanzfrequenz zur Ausflockung des Inhaltsstoffs oder Teile des Inhaltsstoffs.

## Beschreibung

### GEBIET DER ERFINDUNG

Die vorliegende Erfindung betrifft eine Abwasseraufbereitungsanlage und ein Verfahren zur Aufbereitung von Abwasser.

### HINTERGRUND DER ERFINDUNG

Im Stand der Technik ist bekannt, Abwasser derart aufzubereiten, dass sich das Abwasser zur erneuten Benutzung, insbesondere zum Trinken für Menschen eignet.

### ZUSAMMENFASSUNG DER ERFINDUNG

Ein Verfahren zur Aufbereitung von Abwasser ist die Elektrolyse. Hierbei wird ein Gleichstrom an Metallplatten angelegt und das Abwasser einem elektrischen Spannungsfeld ausgesetzt. Elektrisch geladene Teilchen können so aus dem Abwasser gewonnen werden, indem diese sich auf den Metallplatten absetzen. Allerdings lassen sich hierbei elektrisch neutrale Inhaltsstoffe, wie beispielsweise Phosphate, nicht aus dem Abwasser gewinnen.

Eine Aufgabe der Erfindung ist es daher, ein Verfahren zur Aufbereitung von Abwasser derart zur Verfügung zu stellen, dass durch eine Elektrolyse auch elektrisch neutrale Inhaltsstoffe aus dem Abwasser gewonnen werden können.

Als erste Ausführungsform der Erfindung wird ein Verfahren zur Aufbereitung von Abwasser zur Verfügung gestellt, wobei das Abwasser einem Spannungsfeld, insbesondere einem elektromagnetischen Wechselfeld, ausgesetzt wird, um einen Inhaltsstoff aus dem Abwasser zu entfernen, umfassend die Schritte: Anlegen des elektromagnetischen Wechselfeldes und Anlegen der Resonanzfrequenz oder einer Frequenz in der Nähe der Resonanzfrequenz zur Aufspaltung und Ausflockung des Inhaltsstoffs oder Teile des Inhaltsstoffs.

Durch das Spannungsfeld kann elektrische Energie zu den Inhaltsstoffen des Abwassers geführt werden, wodurch diese angeregt werden. Insbesondere kann die Anregung mit der Resonanzfrequenz der Inhaltsstoffe erfolgen, wodurch zum einen eine interne Ladungstrennung innerhalb des einzelnen Inhaltsstoff-Atoms oder - Moleküls erfolgt und bei weiterer Energiezuführung sich eine Aufspaltung des Inhaltsstoff-Atoms bzw. Moleküls ergibt. Die derart aufgespaltenen Teile des Inhaltsstoffs können, da sie unterschiedlich geladen sind, durch ein Spannungsfeld getrennt werden.

Als zweite Ausführungsform der Erfindung wird eine Abwasseraufbereitungsanlage zur Verfügung gestellt, umfassend einen Sekundärreaktor mit einem länglichen Abschnitt entlang dem das Abwasser fließt, wobei entlang dieses Abschnitts Metallplatten als Pakete derart angeordnet sind, dass das Abwasser entlang diesen Metallplatten fließt.

Als dritte Ausführungsform der Erfindung wird ein Computerprogrammprodukt zur Verfügung gestellt, das ein Softwareprogramm zur Realisierung einer Vorrichtung zur Aufbereitung von Abwasser aufweist, wobei das Computerprogrammprodukt einen Satz mit Befehlen umfasst, die veranlassen, ein Verfahren nach einem der Ansprüche 1 bis 3 auszuführen.

Als vierte Ausführungsform der Erfindung wird ein Computerprogramm zur Verfügung gestellt, das durch elektronische Datenübertragung verteilbar, mit Computerprogrammcodemitteln, die so adaptiert sind, dass sie bewirken, dass bei Laden des Programms auf einen Computer dieser die Prozedur nach einem der Ansprüche 1 bis 3 ausführen kann.

Beispielhafte Ausführungsformen werden in den abhängigen Ansprüchen beschrieben.

Gemäß einer außerdem beispielhaften Ausführungsform der Erfindung wird ein Verfahren zur Verfügung gestellt, wobei das Verfahren den weiteren Schritt umfasst: Variieren der Frequenz des elektromagnetischen Wechselfeldes bis die Resonanzfrequenz des Inhaltsstoffs oder eine Frequenz in der Nähe der Resonanzfrequenz erreicht ist.

Durch das Anlegen der Resonanzfrequenz kann auch mit einer kleinen Energiezufuhr ein Aufspalten der Inhaltsstoffe erreicht werden. Je weiter man von der Resonanzfrequenz entfernt ist, umso mehr Energie muss zugeführt werden, damit der Inhaltsstoff auseinanderbricht.

In einer noch weiteren erfindungsgemäßen Ausführungsform wird ein Verfahren zur Verfügung gestellt, wobei das Verfahren geeignet ist, um Phosphate, Triazin-Herbizide, Saure Pestizide, Perfluor-Octansäure, Perfluor-Octansulfonsäure, Benzotriazol, 4-Methyl-1H-Benzotriazol, 5-Methyl-1H-Benzotriazol, Ethylendiamintetraessigsäure, Diethylendiaminpentaessigsäure, Carbamazepin, Diclifenac, 17β-Estradiol, Estron, Gabepentin, Iohexol, Iomeprol, Iopamidol, Iopromid, Irbesartan, Metoprolol, Sulfamethoxazol aus dem Abwasser zu entnehmen.

Gemäß einer beispielhaften Ausführungsform der Erfindung wird eine Abwasseraufbereitungsanlage zur Verfügung gestellt, umfassend einen Sekundärreaktor mit einem länglichen Abschnitt entlang dem das Abwasser fließt, wobei entlang dieses Abschnitts Metallplatten als Pakete derart angeordnet sind, dass das Abwasser entlang diesen Metallplatten fließt.

In einer weiteren erfindungsgemäßen Ausführungsform wird eine Abwasseraufbereitungsanlage zur Verfügung gestellt, wobei 2, 3 oder beliebig viele Metallplatten-Pakete angeordnet sind, wobei Metallplatten-Pakete in der Nähe des Zulaufs mit einer alternierenden Ladung angeordnet sind und wobei bei den Metallplatten-Pakete in der Nähe des Ablaufs die Metallplatten mit einer ersten Ladung eher auf einer ersten Seite angeordnet sind und die Metallplatten mit einer zweiten Ladung eher auf der zweiten Seite angeordnet sind.

In einem ersten Bereich ist es vorrangig, Energie zuzuführen. In diesem Fall sind kurze Abstände zwischen unterschiedlich geladenen Platten vorteilhaft. Auf diese Weise können leichter hohe Spannungsfelder aufgebaut werden. In einem hinteren Teil liegen bereits die aufgespaltenen unterschiedlich geladenen Teile der Inhaltsstoffe vor. In diesem Bereich ist es wichtig, die unterschiedlich geladenen Teile der Inhaltsstoffe zu trennen. Es ist dann sinnvoll gleich geladene Platten an einem Ort zu bündeln, wodurch gegensätzlich geladene Teile der Inhaltsstoffe zu diesem Ort abgelenkt werden können.

Gemäß einem weiteren Ausführungsbeispiel der vorliegenden Erfindung wird eine Abwasseraufbereitungsanlage zur Verfügung gestellt, wobei in der Nähe des Abflusses eine Trennvorrichtung mit einer Trennwand angeordnet ist.

Mit einer Trennvorrichtung kann die Trennung der unterschiedlich geladenen Teile der Inhaltsstoffe mechanisch vorgenommen werden.

In einer weiteren erfindungsgemäßen Ausführungsform wird eine Abwasseraufbereitungsanlage zur Verfügung gestellt, wobei diese Abwasseraufbereitungsanlage zur Durchführung eines Verfahrens nach einem der Ansprüche 1 bis 3 vorgesehen ist.

Als eine Idee der Erfindung kann angesehen werden, Abwasser einem elektromagnetischen Wechselfeld auszusetzen, wobei die Frequenz des Wechselfelds der Resonanzfrequenz eines Inhaltsstoffs entsprechen soll, der aus dem Abwasser entfernt werden soll. Durch die Anregung des Inhaltsstoffs zu Eigenschwingungen kommt es durch Überschwingen zu einem Auseinanderbrechen der Moleküle der Inhaltsstoffe. Es ergibt sich, dass das zuvor elektrisch neutrale Molekül in elektrisch geladene Teile zerspringt. Diese Teile können durch ein elektrisches Feld aus dem Abwasser herausgezogen werden, wodurch das Abwasser gereinigt werden kann.

Der Erfindung liegt die Erkenntnis zugrunde, dass jedes Atom und jedes Molekül eine Eigenschwingung besitzen. Wird das Atom oder das Molekül angeregt, das heißt wird dem Atom oder dem Molekül Energie zugeführt, kann es diese Energie aufnehmen und wieder abgeben. Wird jedoch dem Atom oder dem Molekül sehr viel Energie zugeführt oder wird dem Atom oder dem Molekül Energie mit seiner Resonanzfrequenz zugeführt, kann das Atom bzw. das Molekül "überlastet" werden. Insbesondere kann es bei der Energiezufuhr mit der Resonanzfrequenz zu einer "Resonanzkatastrophe" kommen, bei der das Atom oder das Molekül zerspringt und in seinen Einzelteilen vorliegt.

Ein Atom oder ein Molekül ist nach außen ladungsneutral. Nach einem Zerspringen des Atoms oder des Moleküls können Einzelteile des Atoms oder des Moleküls vorliegen, die positiv oder negativ aufgeladen sind. Diese geladenen Teile können durch ein Spannungsfeld getrennt bzw. aus einem Abwasser herausgefiltert werden.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele deutlich. Es zeigen
Fig. 1 einen Primärreaktor 1,
Fig. 2 einen Sekundärreaktor 2 in einer seitlichen Darstellung,
Fig. 3 einen Sekundärreaktor 2 in einer Draufsicht,
Fig. 4 eine Abdeckung für den Sekundärreaktor 2 ,
Fig. 5 den Sekundärreaktor 2 in einer seitlichen Darstellung,
Fig. 6 eine Abdeckung für den Sekundärreaktor 2,
Fig. 7 den Sekundärreaktor 2 in einer Draufsicht,
Fig. 8 eine Draufsicht des Systems mit Primärreaktor 1 und Sekundärreaktor 2,
Fig. 9 eine seitliche Darstellung des Systems mit Primärreaktor 1 und Sekundärreaktor 2.

### DETAILLIERTE BESCHREIBUNG BEISPIELHAFTER AUSFÜHRUNGSFORMEN

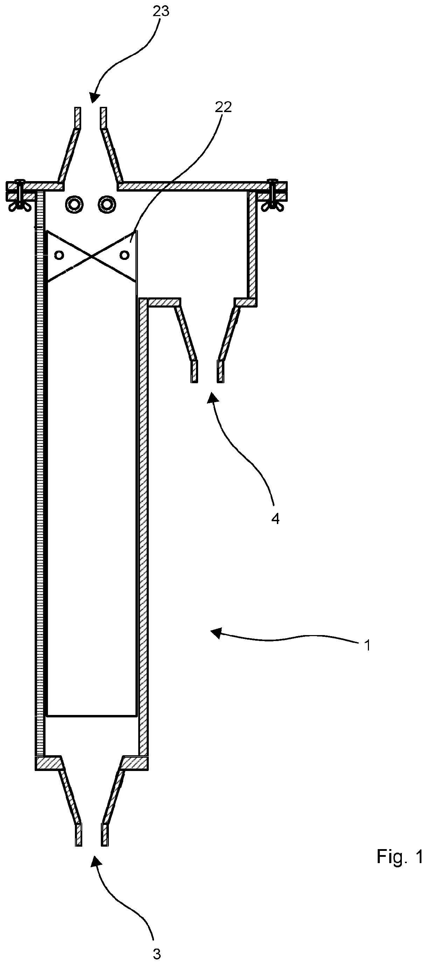

Fig. 1 zeigt einen Primärreaktor 1 zu einer ersten Reinigung des Abwassers, beispielsweise von festen Inhaltsstoffen, beispielsweise Schwebestoffen. Durch die Elektroden 22 kann eine Erstbehandlung vorgenommen werden, wodurch die festen Inhaltsstoffe zusammengeballt werden können und dadurch entfernt werden können. Das zu reinigende Abwasser wird durch den Zulauf 3 in den Primärreaktor eingebracht und durch den Ablauf 4 aus dem Primärreaktor ausgelassen. Der Primärreaktor 1 weist einen Ablauf 23 zur Entlüftung auf, wodurch schädliche oder explosive Gase aus dem System entweichen können.

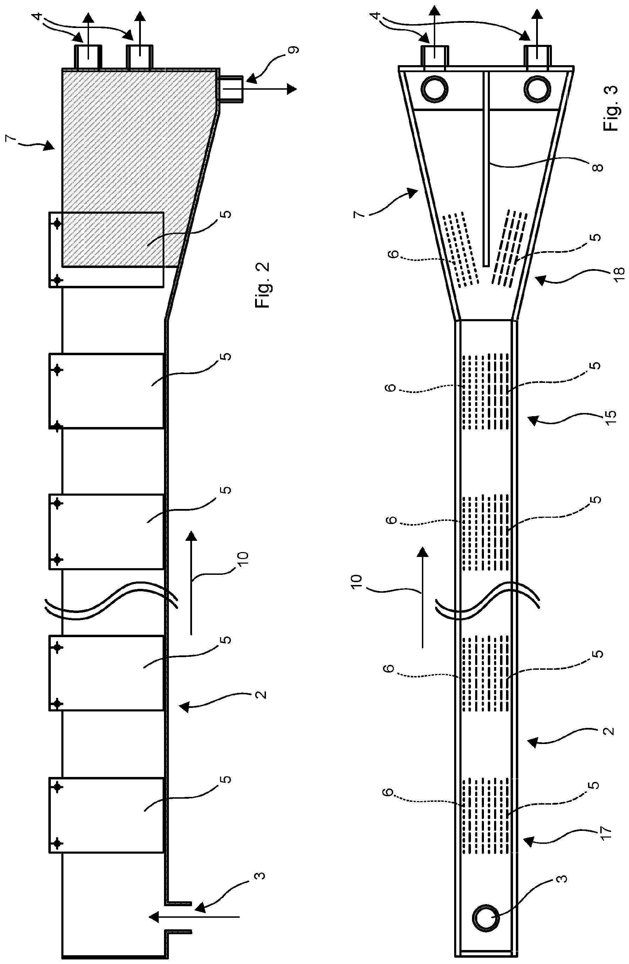

Fig. 2 zeigt einen Sekundärreaktor 2 in einer seitlichen Darstellung. Der Sekundärreaktor 2 weist in seiner Fließrichtung, Richtung in der das Abwasser fließt ausgehend von dem Zulauf hin zum Ablauf, eine Kaskadierung von Metallplatten 5 und 6 auf, an die ein elektromagnetisches Wechselfeld angeschlossen wird. Kurz vor dem Auslauf ist eine Trennvorrichtung 7 angeordnet, die das unterschiedlich geladene Wasser, also die aufgespaltenen Moleküle, trennt.

Fig. 3 zeigt den Sekundärreaktor von oben betrachtet mit den Metallplatten 5 und 6. Die Metallplatten 5 sind in einer Halbwelle der Spannungsversorgung Kathoden, also negativ geladen, und die Metallplatten 6 sind Anoden, also positiv geladen. In der darauffolgenden Halbwelle wechselt die Ladung. Nahe des Zulaufs 3 können mehrere Metallplatten 5 und 6 hintereinander senkrecht bzw. quer zur Fließrichtung angeordnet werden. Die Ladungen können dabei senkrecht zur Fließrichtung alternierend ausgebildet sein, sodass sich eine Anoden-Metallplatte mit einer Kathoden-Metallplatte abwechselt. Es können weitere Metallplatten-Pakete 15, 17 und 18 entlang der Fließrichtung angeordnet werden, wobei die Anordnung zusehends derart sein kann, dass auf einer Seite mehr Anoden-Metallplatten 6 und auf der anderen Seite mehr Kathoden-Metallplatten 5 angeordnet sind. In einem letzten Paket 15 können auf einer Seite ausschließlich Anoden-Metallplatten 6 und auf der anderen Seite ausschließlich Kathoden-Metallplatten 5 angeordnet sein. Das Abwasser bzw. dessen Inhaltsstoffe sind dann derart getrennt, dass auf einer Seite die positiv geladenen Inhaltsstoffe und auf der anderen Seite die negativ geladenen Inhaltsstoffe versammelt sind. In der weiteren Fließrichtung 10 kann eine Trennvorrichtung 7 mit einer Trennwand 8 derart angeordnet sein, sodass die unterschiedlich geladenen Teile getrennt werden und in verschiedenen Abläufen 4 aufgefangen werden können.

Fig. 3 zeigt insbesondere ein Paket von Ladungsträger-Platten 17, wobei die jeweiligen einzelnen Platten 5 und 6 eine unterschiedliche Ladung aufweisen können. Dieses Ladungsplattenpaket 17 ist in einem ersten Abschnitt der Anlage nahe dem Zulauf angeordnet, wobei die einzelnen Ladungsplatten 5 und 6 alternierend in Richtung oben bzw. unten bezüglich der Zeichnungsebene angeordnet sind. In diesem vorderen Bereich der Anlage geht es ausschließlich darum, dem Abwasser Energie zuzuführen, wobei die Energie eine Frequenz aufweisen sollte, die der Resonanzfrequenz des aufzuspaltenden Moleküls bzw. Atoms entsprechen sollte oder zumindest in deren Nähe liegen sollte. Eine Trennung bereits aufgespaltener Inhaltsstoffe ist in diesem Bereich nicht möglich, da eine Aufspaltung noch nicht erfolgte. Zudem ist die alternierende Anordnung auch deswegen vorteilhaft, da hierdurch zwischen unterschiedlich geladenen Platten 5 und 6 ein nur kurzer Abstand realisiert werden kann. Es ist hierdurch einfacher ein starkes Spannungsfeld aufzubauen. Am Ende der Anlage ist ein weiteres Ladungsträgerpaket 15 mit einzelnen Platten 5 und 6 angeordnet. Bei diesem Ladungsträgerpaket 15 sind die Platten 5 und 6 nach ihrer Ladung geordnet angeordnet. In der Zeichnung sind oben die Platten 6 und unten die Platten 5 angeordnet. In diesem Bereich am Ende der Anlage wurden bereits die Inhaltsstoffe während ihres Laufs durch die Anlage aufgespalten, weswegen in diesem Bereich nur noch eine Trennung und Filterung der gespaltenen Inhaltsstoffe durchgeführt wird.

Die Ladungspakete 18 führen die unterschiedlich geladenen aufgespaltenen Teile der Inhaltsstoffe in unterschiedliche Behälter.

Eine Ausflockung von Inhaltsstoffen wird daher durch elektromagnetische Felder bzw. Wellen erreicht, wobei eine Anregung der Moleküle der Inhaltsstoffe beabsichtigt wird. Hierzu sind die Metallplatten in dem Sekundärreaktor 2 vorgesehen, die in resonatorischer Kompatibilität zu den Inhaltsstoffen, die ausgefällt werden sollen, diese mit Energie versorgen. Hierdurch ergibt sich ein inharmonisches Überschwingen, wodurch sich eine Ladungstrennung innerhalb des Atoms bzw. Moleküls des Inhaltsstoffs und letzten Endes zum Auseinanderbrechen des Atoms oder Moleküls in seine unterschiedlich geladenen Teile ergibt.

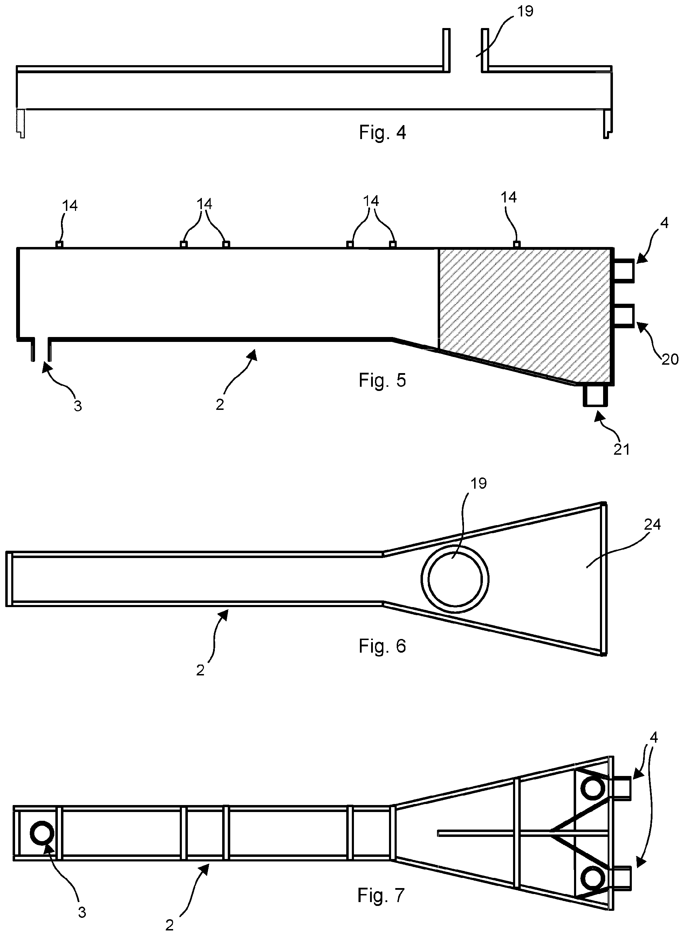

Fig. 4 zeigt eine Abdeckung eines Sekundärreaktors mit einer Absaugöffnung 19 für vorhandene oder entstehende Gasbestandteile.

Fig. 5 zeigt den Sekundärreaktor 2 in einer seitlichen Darstellung mit dem Zufluss 3 und den Abläufen 4, 20 und 21. Der Ablauf 4 dient dem Ablauf für Schwimmschichten. Der Ablauf 20 ist für den Abfluss der Klarphase vorgesehen und der Ablauf 21 ist für den Abfluss des Bodenschlamms vorhanden. Die Stege 14 dienen zur Befestigung, zur Auflage oder zur Anordnung der Elektroden 5.

Fig. 6 zeigt den Sekundärreaktor 2 mit der Absaugöffnung 19, damit entstehende Gase, beispielsweise gesundheitsschädliche, brennbare oder explosive Gase, aus dem Sekundärreaktor 2 entweichen bzw. abgesaugt werden können. Der Sekundärreaktor 2 ist in einer Draufsicht dargestellt, wobei die Abdeckung 24 auf dem Sekundärreaktor 2 aufliegt.

Fig. 7 zeigt in einer Draufsicht den Sekundärreaktor 2 mit dem Zufluss 3 und den Abflüssen bzw. Abläufen 4, 20 und 21. Der Sekundärreaktor 2 ist in einer Draufsicht ohne die Abdeckung 24 dargestellt.

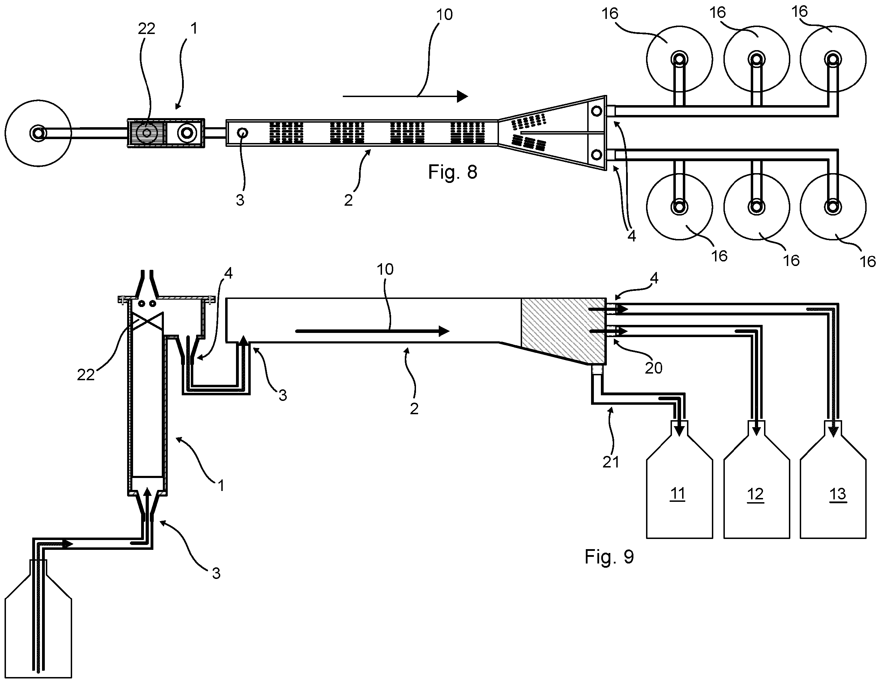

Fig. 8 zeigt das komplette System mit dem Primärreaktor 1 und dem Sekundärreaktor 2 in einer Draufsicht. Außerdem sind Auffangbehälter 16 gezeigt.

Fig. 9 zeigt das komplette System mit dem Primärreaktor 1 und dem Sekundärreaktor 2 in einer Seitenansicht. Außerdem sind Auffangbehälter 11, 12 und 13 gezeigt.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Primärreaktor
- 2: Sekundärreaktor
- 3: Zulauf
- 4: Ablauf für Schwimmschichten
- 5: Metallplatte
- 6: Metallplatte
- 7: Trennvorrichtung
- 8: Trennwand
- 9: Ablauf Schlamm
- 10: Fließrichtung
- 11: Auffangbehälter für Bodenschlamm
- 12: Auffangbehälter für die Klarphase
- 13: Auffangbehälter für die Schwimmschicht
- 14: Stege, auf denen Elektroden 5 befestigt bzw. angeordnet sind
- 15: bezüglich des Zulaufs hintere Ladungsplatten
- 16: Auffangbehälter
- 17: bezüglich des Zulaufs vordere Ladungsplatten
- 18: Ladungsplatten nur zum Filtern des aufgespaltenen Inhaltsstoffs
- 19: Absaugöffnung, um das Gas, das entsteht, abgesaugt werden kann
- 20: Ablauf für die Klarphase
- 21: Ablauf für den Bodenschlamm
- 22: Elektroden
- 23: Ablauf für Gase
- 24: Abdeckung des Sekundärreaktors 2

## Patentansprüche

1. Verfahren zur Aufbereitung von Abwasser, wobei das Abwasser einem Spannungsfeld, insbesondere einem elektromagnetischen Wechselfeld, ausgesetzt wird, um einen Inhaltsstoff aus dem Abwasser zu entfernen, umfassend die Schritte:
Anlegen des elektromagnetischen Wechselfeldes und
Anlegen der Resonanzfrequenz oder einer Frequenz in der Nähe der Resonanzfrequenz zur Aufspaltung und Ausflockung des Inhaltsstoffs oder Teile des Inhaltsstoffs.

2. Verfahren nach Anspruch 1, wobei das Verfahren den weiteren Schritt umfasst: Variieren der Frequenz des elektromagnetischen Wechselfeldes bis die Resonanzfrequenz des Inhaltsstoffs oder eine Frequenz in der Nähe der Resonanzfrequenz erreicht ist.

3. Verfahren nach einem der vorhergehenden Ansprüche, wobei das Verfahren geeignet ist, um Phosphate, Triazin-Herbizide, Saure Pestizide, Perfluor-Octansäure, Perfluor-Octansulfonsäure, Benzotriazol, 4-Methyl-1H-Benzotriazol, 5-Methyl-1H-Benzotriazol, Ethylendiamintetraessigsäure, Diethylendiaminpentaessigsäure, Carbamazepin, Diclifenac, 17β-Estradiol, Estron, Gabepentin, Iohexol, Iomeprol, Iopamidol, Iopromid, Irbesartan, Metoprolol, Sulfamethoxazol aus dem Abwasser zu entnehmen.

4. Abwasseraufbereitungsanlage umfassend einen Sekundärreaktor (2) mit einem länglichen Abschnitt entlang dem das Abwasser fließt, wobei entlang dieses Abschnitts Metallplatten (5, 6) als Pakete (15, 17, 18) derart angeordnet sind, dass das Abwasser entlang diesen Metallplatten (5, 6) fließt.

5. Abwasseraufbereitungsanlage nach Anspruch 4, wobei 2, 3 oder beliebig viele Metallplatten-Pakete (15, 17, 18) angeordnet sind, wobei Metallplatten-Pakete (17) in der Nähe des Zulaufs mit einer alternierenden Ladung angeordnet sind und wobei bei den Metallplatten-Pakete (15, 18) in der Nähe des Ablaufs die Metallplatten mit einer ersten Ladung eher auf einer ersten Seite angeordnet sind und die Metallplatten mit einer zweiten Ladung eher auf der zweiten Seite angeordnet sind.

6. Abwasseraufbereitungsanlage nach einem der Ansprüche 4 oder 5, wobei in der Nähe des Abflusses eine Trennvorrichtung (7) mit einer Trennwand (8) angeordnet ist.

7. Abwasseraufbereitungsanlage nach einem der Ansprüche 4 bis 6 zur Durchführung eines Verfahrens nach einem der Ansprüche 1 bis 3.

8. Computerprogrammprodukt, das ein Softwareprogramm zur Realisierung einer Vorrichtung zur Aufbereitung von Abwasser aufweist, wobei das Computerprogrammprodukt einen Satz mit Befehlen umfasst, die veranlassen, ein Verfahren nach einem der Ansprüche 1 bis 3 auszuführen.

9. Computerprogramm, durch elektronische Datenübertragung verteilbar, mit Computerprogrammcodemitteln, die so adaptiert sind, dass sie bewirken, dass bei Laden des Programms auf einen Computer dieser die Prozedur nach einem der Ansprüche 1 bis 3 ausführen kann.
